# EUROPEAN PATENT SPECIFICATION

(11) **EP 1 701 009 B1**
(45) Date of publication and mention of the grant of the patent: **02.01.2008**
(21) Application number: 06004991.3
(22) Date of filing: 10.03.2006
(51) Int. Cl.: F01N 1/00, F01N 7/02, F01N 7/08, B62K 11/00

(54) **Motorcycle**
Motorrad
Motocyclette

(30) Priority: 11.03.2005 JP 2005069761; 01.06.2005 JP 2005161445; 31.10.2005 JP 2005316085
(43) Date of publication of application: 13.09.2006
(73) Proprietor: Yamaha Hatsudoki Kabushiki Kaisha, Iwata-shi, Shizuoka 438-8501 (JP)
(72) Inventor: Terashima, Yasuto, Iwata-shi Shizuoka-ken 438-8501 (JP); Takeshita, Hirotoshi, Iwata-shi Shizuoka-ken 438-8501 (JP)
(74) Representative: Grünecker, Kinkeldey, Stockmair & Schwanhäusser Anwaltssozietät

(56) References cited:
- EP-A- 1 247 955
- DE-A1- 4 330 129
- US-A- 4 809 800
- PATENT ABSTRACTS OF JAPAN vol. 008, no. 090 (M-292), 25 April 1984 (1984-04-25) & JP 59 005824 A (HONDA GIKEN KOGYO KK), 12 January 1984 (1984-01-12)
- PATENT ABSTRACTS OF JAPAN vol. 017, no. 686 (M-1529), 15 December 1993 (1993-12-15) & JP 05 231145 A (SUZUKI MOTOR CORP), 7 September 1993 (1993-09-07)
- PATENT ABSTRACTS OF JAPAN vol. 006, no. 026 (M-112), 16 February 1982 (1982-02-16) & JP 56 143311 A (SUZUKI MOTOR CO LTD), 9 November 1981 (1981-11-09)

## Description

The present invention relates to a motorcycle according to the preamble of claim 1, and in particular to an exhaust system of a motorcycle, which includes an exhaust pipe unit connected with an engine and a muffler unit connected with the exhaust pipe unit.

In some motorcycles, a muffler as a heavy component is disposed below an engine so that the center of gravity of the vehicle can be located at a position as low as possible. In this case, in JP-A-2002-303133, such a construction is adopted that exhaust pipes of some cylinders extend through the side of the muffler disposed below the engine to the vicinity of a rear wheel to connect with the muffler from the rear, and exhaust pipes of the rest of the cylinders extend above the muffler to connect with extensions of some of the exhaust pipes.

The conventional exhaust system described above adopts such a construction that the exhaust pipes coming from some of the cylinders pass through the side of the muffler. In this structure, the length in the vehicle width direction required for disposition of the muffler and the exhaust pipes increases, and the angle of bank accordingly decreases.

In addition, since the exhaust pipes coming from the rest of the cylinders pass above the muffler in this structure, the engine needs to be mounted at a high position so as to obtain the sufficient minimum road clearance. As a result, the center of gravity of the vehicle comes to a higher position.

US 4,809,800 discloses an exhaust system for a motorcycle having an exhaust device connected to the engine unit exhaust pipe. Said exhaust device comprises an outer shell forming a first expansion chamber, arranged partially beneath the engine. Therein, the exhaust gases are led from the engine via the exhaust pipes, the first expansion chamber, and a second expansion chamber to the surroundings.

Further exhaust systems are known from JP 59-005824 A and JP 05-231145 A.

Accordingly, the present invention is made in view of the above fact, and an object thereof is to provide a motorcycle as indicated above with an exhaust system solving the above problems, which is capable of securing an angle of bank and the center of gravity of the vehicle body located at a low position while securing a sufficient length of an exhaust pipe unit.

This objective is solved in an inventive manner by a motorcycle, comprising an engine, an exhaust pipe unit connected with the engine, and a muffler unit connected with the exhaust pipe unit, wherein the muffler unit includes first and second separately disposed mufflers, wherein the first muffler is connected with the exhaust pipe unit and is disposed between a lower portion of the engine and a rear wheel, and wherein the second muffler is connected with the first muffler and is disposed near a side of the rear wheel, wherein inclined portions are formed on left and right sides of the first muffler such that an inclination of the inclined portions rises toward an outside in a vehicle width direction as viewed from a front of the motorcycle.

Preferably, the exhaust pipe unit is disposed so as to pass through the lower portion of the engine.

Further, preferably the second muffler may extend to a rear of the vehicle and may be inclined at an angle approximately equal to that of the inclined portions of the first muffler.

Still further, preferably the first muffler is disposed between an oil pan of the engine and the rear wheel as viewed from the side of the motorcycle.

Yet further, preferably a bottom surface of the first muffler is disposed approximately at the same level as that of the minimum road clearance as viewed from the side of the motorcycle.

According to a preferred embodiment, the second muffler extends diagonally upward to the rear with inclination, which rises toward the rear, and wherein at least a discharge port of the second muffler lies within a projection plane of the rear wheel in the vehicle width direction as viewed from the side of the motorcycle. Therein, an upper end plane of the discharge port of the second muffler may be disposed approximately at the same level as that of the upper end plane of a rear arm which supports the rear wheel as viewed from the side of the motorcycle.

According to a further preferred embodiment, the first muffler is divided into a first expansion chamber formed at the rear, a second expansion chamber formed at the front, and wherein the exhaust pipe unit penetrates through the second expansion chamber and opens within the first expansion chamber; and the first and second expansion chambers are communicated with each other through a communicating pipe. Therein, an upstream port of a connecting passage which communicates with the second expansion chamber may be connected with the side wall of the first muffler, and a downstream port of the connecting passage may be connected with the front wall of the second muffler so as to communicate therewith. Moreover, a first catalyst may be provided within the exhaust pipe unit in the vicinity of an upstream portion of the first muffler, and a second catalyst may be provided within the communicating pipe for connecting the first and second expansion chamber such that these chambers can communicate with each other. Likewise, the portion of the exhaust pipe unit in which the first catalyst is provided may lie inside the angle of bank as viewed from the front of the motorcycle.

According to another preferred embodiment, a detection section of an oxygen sensor is inserted into the first expansion chamber of the first muffler. Therein, the oxygen sensor may be so positioned as to be directed to the inside front of a foot rest.

According to yet another preferred embodiment, the first muffler is disposed below the engine and attached to a vehicle body frame, the second muffler is disposed near the side of the rear wheel, and a portion of the side wall of the first muffler near the second muffler and the front wall of the second muffler is connected through a connecting passage such that the first and second mufflers can communicate with each other.

According to still another preferred embodiment, the first muffler includes a first expansion chamber formed at the rear, a second expansion chamber formed at the front and connected with the exhaust pipe unit, a first connecting pipe for connecting the exhaust pipe unit and the first expansion chamber passing through the second expansion chamber, and a second connecting pipe for connecting the first expansion chamber and the second expansion chamber, and the second muffler includes a third expansion chamber connected with the second expansion chamber. Therein, the first connecting pipe may be disposed in a lower region of the first muffler, and the second connecting pipe may be disposed in an upper region of the first muffler. Moreover, a transverse cross section of the second connecting pipe may have a long-hole shape which is long in the vehicle width direction.

Beneficially, the exhaust pipe unit has a plurality of exhaust pipes, and at least two junction pipes for unifying the respective exhaust pipes, and the respective junction pipes are connected with the first muffler and arranged in parallel in the vehicle width direction.

Further, beneficially a catalyst is provided within the exhaust pipe unit at a portion upstream of a connecting portion between the exhaust pipe unit and the first muffler.

Still further, beneficially a rear suspension for connecting a rear arm for supporting the rear wheel and the vehicle body frame is disposed above the first muffler.

Yet further, beneficially the second muffler is disposed along a rear arm for supporting the rear wheel, and a clearance concave for providing a predetermined clearance between the rear arm and the outer periphery of the second muffler is formed on the rear arm.

In addition, the lower portion of the first muffler may be covered by an under cowling, and a front opening through which flow of air generated during running of the motorcycle is introduced and a discharge opening through which the air is discharged may be formed on the under cowling.

Also, a connecting passage for connecting the first muffler and second muffler may be equipped with an exhaust valve for varying the passage area is disposed within the connecting passage.

Likewise, a connecting passage for connecting the first muffler and second muffler may be equipped with a heat insulating cover for covering at least the outside-vehicle portion of the connecting passage which is provided on the second muffler. Therein, the exhaust valve for varying the passage area may be disposed within the connecting passage, and the heat insulating cover may cover the exhaust valve as well as the connecting passage.

In the following, the present invention is explained in greater detail with respect to several embodiments thereof in conjunction with the accompanying drawings, wherein:
- Fig. 1: is a side view of a motorcycle including an exhaust system in a first embodiment,
- Fig. 2: is a side view of the exhaust system,
- Fig. 3: illustrates the exhaust system as viewed from the rear of the vehicle,
- Fig. 4: illustrates the exhaust system as viewed from the side of the vehicle,
- Fig. 5: is a cross-sectional view of an exhaust pipe unit in the exhaust system,
- Fig. 6: is a front view of a first muffler in the exhaust system,
- Fig. 7: is a side view of the exhaust system,
- Fig. 8: is a front view of the exhaust system,
- Fig. 9: is a perspective view of the exhaust system,
- Fig. 10: is a perspective view of the first muffler,
- Fig. 11: is a side cross-sectional view of the first muffler,
- Fig. 12: is a front cross-sectional view of the first muffler,
- Fig. 13: is a side view of an exhaust system in a second embodiment,
- Fig. 14: is a perspective view of the exhaust system as viewed from diagonally rear,
- Fig. 15: is a plan view of the exhaust system.
- Fig. 16: is a perspective view of the exhaust system as viewed from diagonally above,
- Fig. 17: is a perspective view of the exhaust system as viewed from diagonally rear,
- Fig. 18: is a side cross-sectional view of a first muffler of the exhaust system,
- Fig. 19: is a side cross-sectional view of a second muffler of the exhaust system,

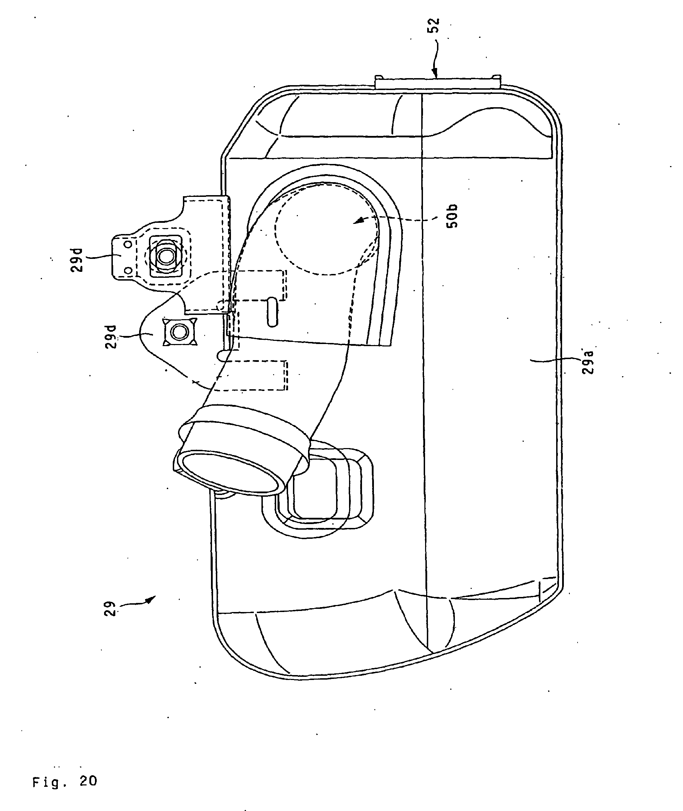

- Fig. 20: is a perspective view of the first muffler of the exhaust system as viewed from the side according to an embodiment, and

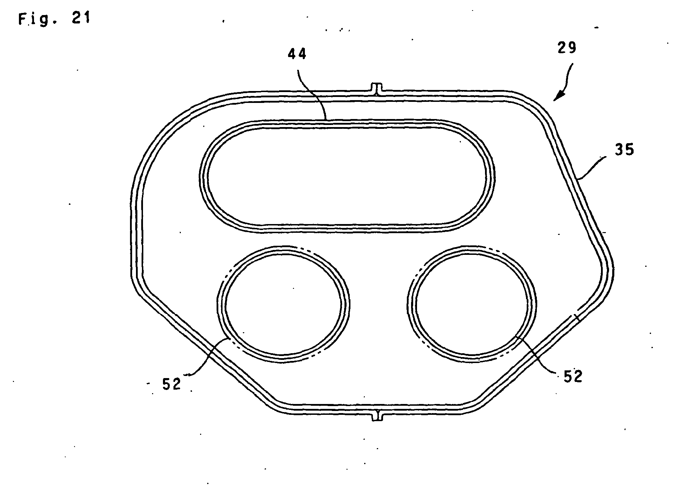

- Fig. 21: is a front cross-sectional view of the first muffler according to an embodiment.

Within the drawings, reference numeral
- 1: is a motorcycle
- 2b': is a cross frame member (vehicle body frame)
- 7: is a rear arm
- 7b: is a clearance concave
- 8: is a rear wheel
- 14: is an under cowl
- 14a: is a discharge opening
- 15: is an engine
- 15b: is an oil pan
- 17: is a rear suspension
- 21: is a foot rest
- 25: is an exhaust system
- 25a: is an exhaust pipe unit
- 27a: through 27d are exhaust pipes (exhaust pipe unit)
- 28a, 28b: are junction pipes (exhaust pipe unit)
- 26: is a muffler unit
- 29: is a first muffler
- 29a: is an inclined portion
- 29h: is a right wall (side wall of first muffler near second muffler)
- 30: is a connecting pipe
- 31: is a second muffler
- 31 a: is an inclined portion
- 31 b: is a discharge port
- 37: is an exhaust valve
- 43: is a first catalyst
- 44a: is a second catalyst
- 45: is an oxygen sensor
- 45a: is a detection section
- 51: is a first communicating pipe
- 52: is a second communicating pipe
- 60, 61: are connecting pipes
- 65: is a heat insulating cover
- a: is a second expansion chamber
- b: is a first expansion chamber
- c: is a third expansion chamber
- H: is a minimum road clearance

Several embodiments are hereinafter described with reference to the appended drawings.

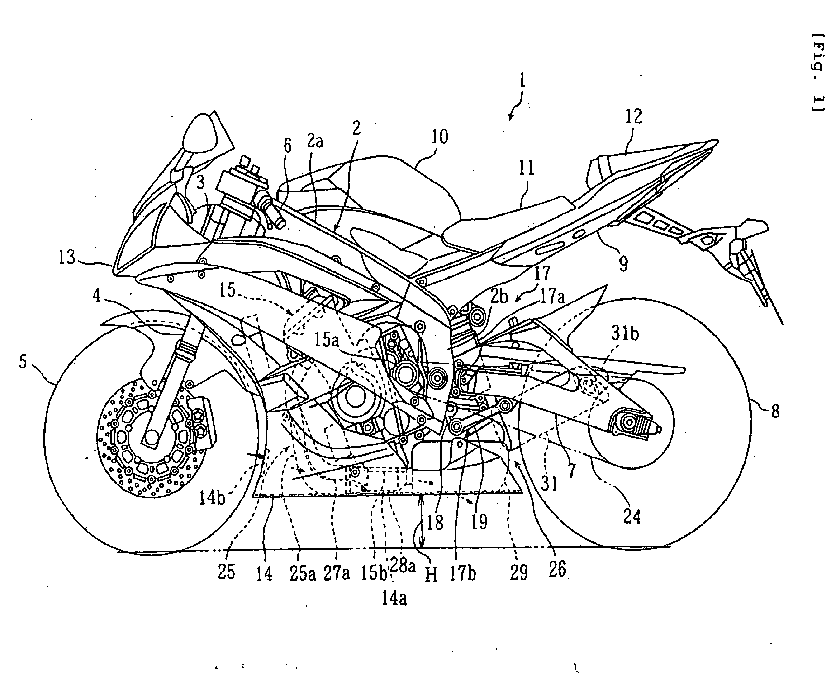

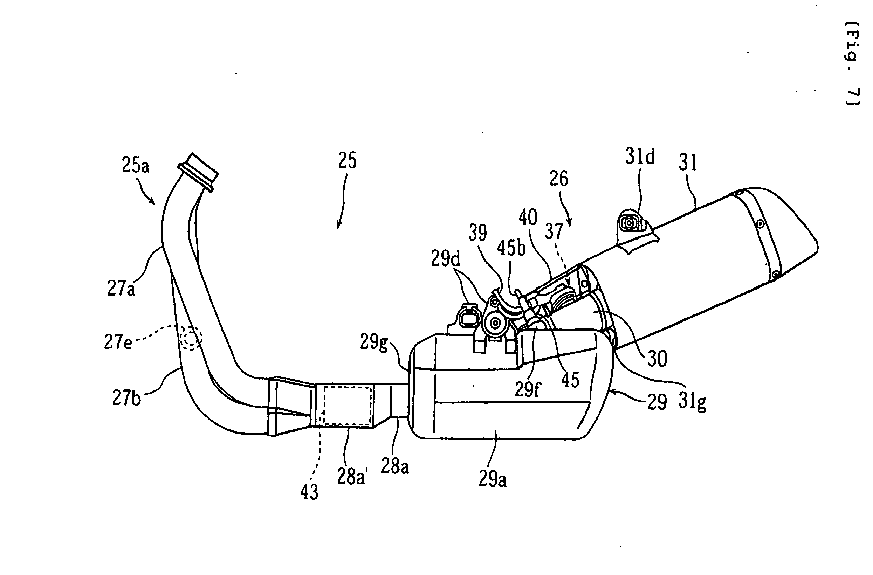

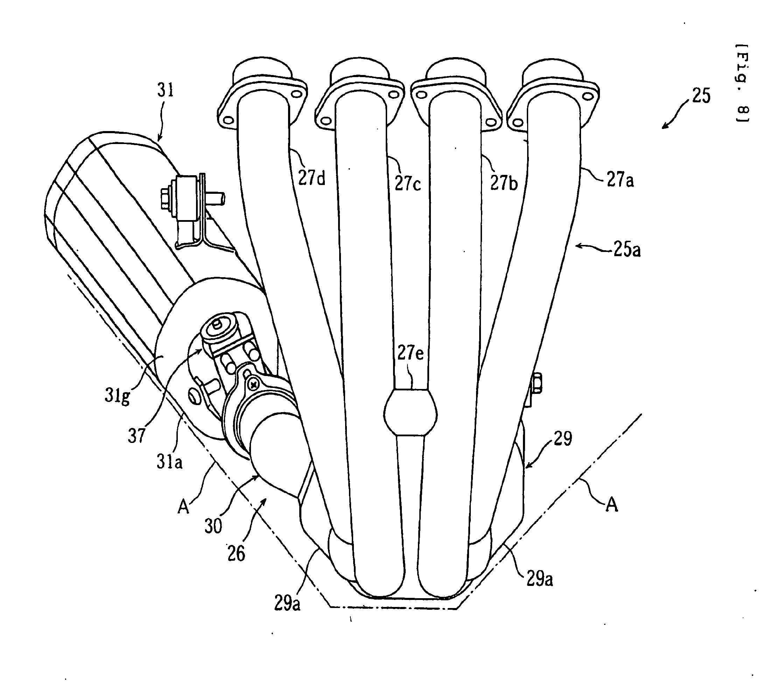

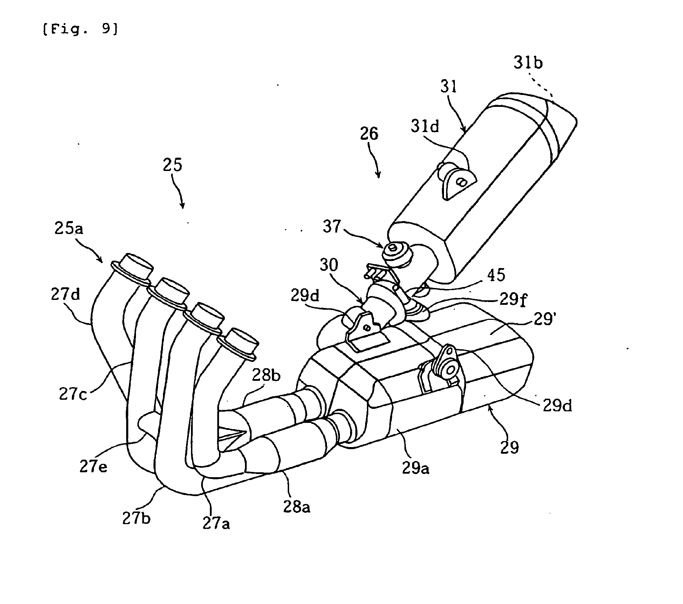

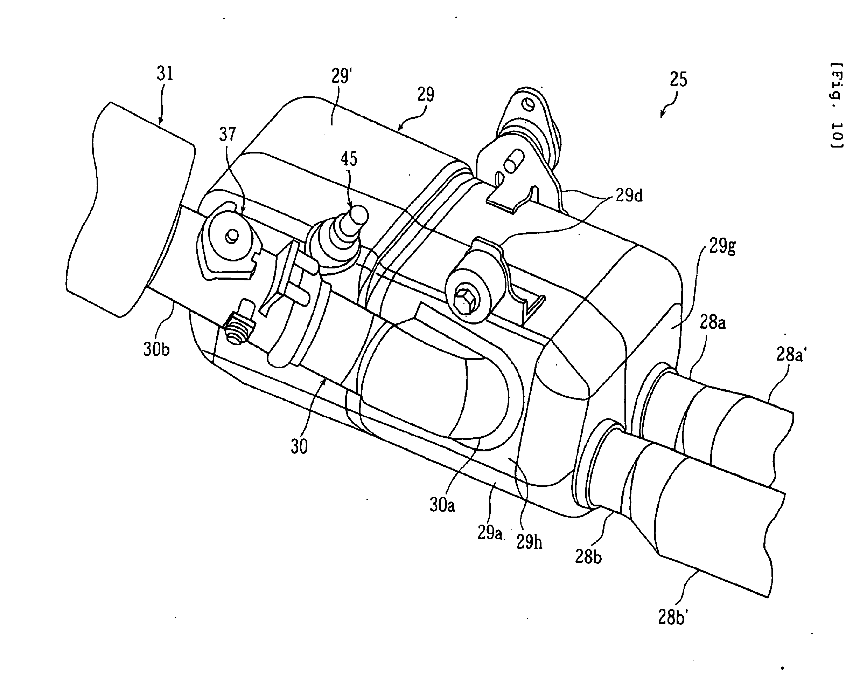

Figs. 1 through 12 are figures for explaining an exhaust system of a motorcycle in a first embodiment. The front-to-rear and right-to-left directions in this embodiment refer to the front-to-rear and right-to-left directions as viewed from a rider sitting on a seat.

In the figures, the numeral 1 indicates a motorcycle, and the motorcycle 1 generally includes the following components. A front fork 4 is supported by a head pipe 3 such that the front fork 4 can be steered to the left and right. The head pipe 3 is attached to the front end of a vehicle body frame 2 made of aluminum alloy. A front wheel 5 and steering handlebars 6 are disposed at the lower end and the upper end of the front fork 4, respectively. A rear arm 7 is supported by left and right rear brackets 2b of the vehicle body frame 2 such that the rear arm 7 can swing upward and downward. A rear wheel 8 is disposed at the rear end of the rear arm 7.

The vehicle body frame 2 has left and right main frames 2a, 2a which extend diagonally downward to the rear of the vehicle from the head pipe 3, the rear arm brackets 2b which extend downward substantially in the vertical direction from the rear ends of the left and right main frames 2a, 2a, and a seat rail 9 which extends diagonally upward to the rear of the vehicle from the rear ends of the left and right main frames 2a, 2a.

A fuel tank 10 is equipped on the left and right main frames 2a, 2a. A main seat 11 and a tandem seat 12 are disposed on the seat rail 9. The front region of the front fork 4 is covered by a front cover 13. The lower regions of the left and right main frames 2a are covered by an under cowl 14.

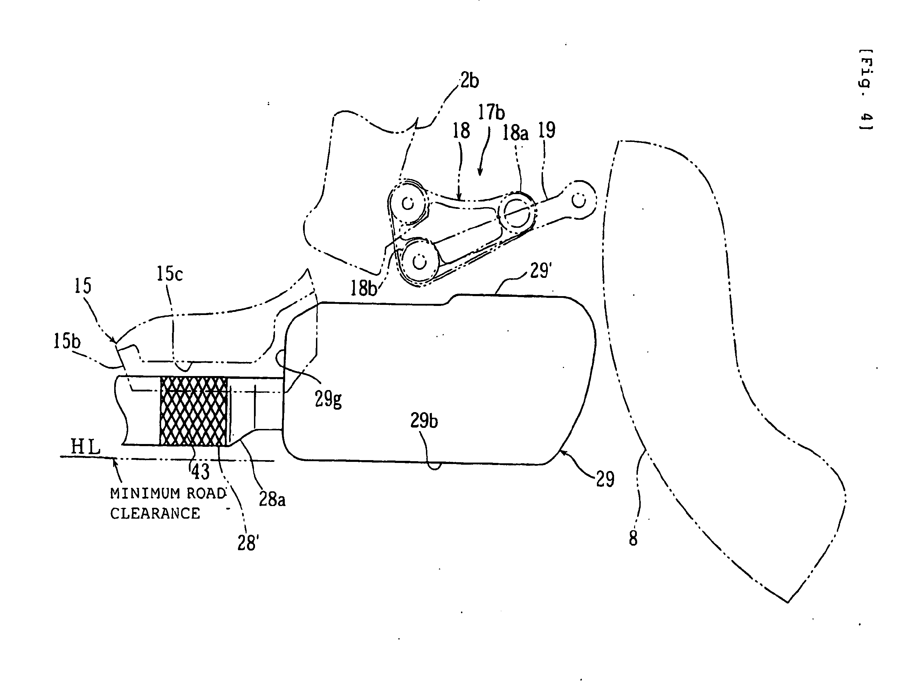

A rear suspension 17 is disposed between the rear arm 7 and the vehicle body frame 2. The rear suspension 17 has a damper 17a whose upper end is connected with a cross pipe (not shown), and a link mechanism 17b connected with the lower end of the damper 17a. The link mechanism 17b has a triangular link member 18 connected with the rear arm bracket 2b, and a link arm 19 whose front end is connected with a lower end 18b of the link member 18. The rear end of the link arm 19 is connected with the rear arm 7. The lower end of the damper 17a is connected with a rear end 18a of the link member 18 (see Figs. 1 and 4).

The front ends of two-forked foot rest brackets 20, 20 extending toward the rear are fixed to the lower portions of the left and right rear arm brackets 2b, 2b. Foot rests 21, 21 are attached to the rear ends of the left and right foot rest brackets 20, 20. A brake pedal 22 is attached to the inside of the foot rest 21 of the left foot rest bracket 20 such that the brake pedal 22 can vertically swing. A master cylinder 23 is connected with the brake pedal 22.

An engine 15 is suspended and supported by the left and right main frames 2a, 2a and the rear arm brackets 2b, 2b. The engine 15 is a water-cooled type 4-cycle parallel 4-cylinder engine, and is mounted with its cylinder axis inclined toward the front. An output shaft 15a of the engine 15 is connected with the rear wheel 8 by a gearing chain 24.

An air intake unit is disposed above the engine 15, and an exhaust system 25 is provided below the engine 15. The engine 15 is positioned below the lower surface of the main frame 2a so that the center of gravity of the vehicle is located at a low position. An air cleaner (not shown) having a large capacity is provided in a space between the engine 15 and the fuel tank 10, which is produced as a result of arrangement of the engine 15 in this manner.

The exhaust system 25 has an exhaust pipe unit 25a connected with the engine 15 and a muffler unit 26 connected with the exhaust pipe unit 25a.

The exhaust pipe unit 25a is constituted by four exhaust pipes 27a through 27d which extend downward through the front region of the engine 15, turn toward the rear below an oil pan 15b of the engine 15, and then further extend toward the rear, and a pair of left and right junction pipes 28a and 28b. The left junction pipe 28a unifies the left two exhaust pipes 27a and 27b into one pipe, and the right junction pipe 28b unifies the right two exhaust pipes 27c and 27d into one pipe, respectively. The inside two exhaust pipes 27b and 27c communicate with each other at an intermediate position through a communicating pipe 27e.

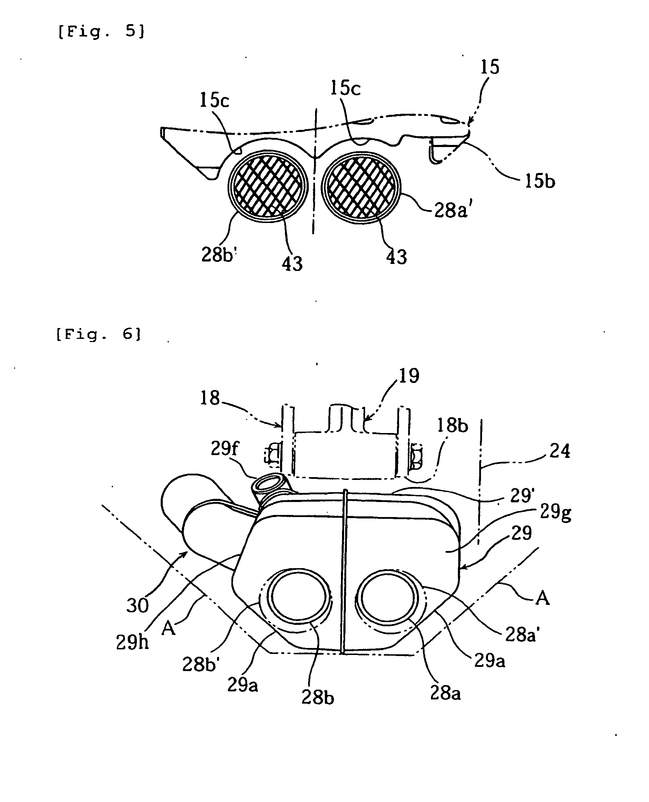

The left and right junction pipes 28a and 28b extend toward the rear along the bottom surface of the oil pan 15b. Concaves 15c, 15c are formed on the bottom of the oil pan 15b, and the upper portions of the left and right junction pipes 28a, 28b are provided within the concaves 15c, 15c, respectively (see Figs. 4 and 5). This structure allows the engine 15 to be disposed at a further lower position while securing the minimum road clearance from the left and right junction pipes 28a and 28b.

The muffler unit 26 has a first muffler 29 connected with the left and right junction pipes 28a and 28b, and a second muffler 31 connected with the first muffler 29 via a connecting pipe (connecting passage) 30.

The first muffler 29 is a substantially rectangular solid component which is formed by combining left and right halves. The first muffler 29 is interposed between the oil pan 15b of the engine 15 and the rear wheel 8, and disposed to be positioned below the foot rest 21. The first muffler 29 is suspended and supported by a cross frame member 2b' of the rear arm bracket 2b as a part of the vehicle body frame using left and right attachment brackets 29d, 29d provided on the first muffler 29.

A rear half 29' of the first muffler 29 positioned at the back of the link member 18 expands upward in such a range that the rear half 29' does not interfere with the link arm 19. This structure expands the capacity of a rear expansion chamber b which will be described later.

The second muffler 31 is substantially cylindrical, and is disposed on the right side of the rear wheel 8. The second muffler 31 extends diagonally upward such that the major part of the second muffler 31 including a discharge port 31 b is disposed within the projection plane of the rear wheel 8 as viewed from the side of the vehicle. The second muffler 31 is arranged in such a position that the upper end plane of the discharge port 31 b and the upper end plane of the rear arm 7 are substantially at the same level as viewed from the side of the vehicle (see Fig. 1). The second muffler 31 is suspended and supported by the foot rest bracket 20 via an attachment member 31 d formed on the second muffler 31.

Inclined portions 29a, 29a are formed on the left and right lower edges of the first muffler 29 to increase the angle of bank as viewed from the front of the vehicle. The inclination of the left and right inclined portions 29a rises toward the outside in the vehicle width direction. The height of the first muffler 29 is determined such that the lowest portion of a bottom surface 29b is substantially in correspondence with a line HL indicating a minimum road clearance H (see Figs. 1 and 4).

The minimum road clearance H herein refers to a clearance between the lowest portion of the vehicle except for the tires and the road surface in the state that the vehicle stands with no load. The minimum road clearance H is established to the lowest possible position where the lowest portion of the vehicle does not contact the road surface when the front and rear wheels are at the maximum stroke, or to the lowest possible position where the lowest portion of the vehicle does not contact the boundary between a load-carrying platform of a truck or the like and an inclined passage when the inclined passage is used to place the vehicle on the load-carrying platform for transportation of the vehicle. Thus, the first muffler 29 in this embodiment is disposed at the lowest possible position where the muffler 29 does not contact the road surface at the time of the maximum stroke or other occasions. This structure therefore contributes to the lowering of the position of the center of gravity of the vehicle.

The second muffler 31 has a substantially triangular shape having left and right inclined sides 31a, 31a as viewed in the cross-sectional view. The right inclined side 31a is disposed to be inclined substantially at the same angle as that of the inclined portion 29a of the first muffler 29. Thus, the exhaust pipe unit 25a, the first and second mufflers 29 and 31, and all other components of the exhaust system which will be discussed later are disposed within an oblique line A indicating the angle of bank.

The inside space of the first muffler 29 is divided by a partition wall 35 into a second expansion chamber a provided at the front and the first expansion chamber b provided at the rear. The second and first expansion chambers a and b have approximately the same capacity, and communicate with each other through a second communicating pipe 44. Glass wools 36, 36 are affixed to the inner surfaces of the second and first expansion chambers a and b so as to reduce exhaust noise and prevent temperature increase due to exhaust gas and generation of shell noise.

The left and right junction pipes 28a and 28b are connected with a front wall 29g of the first muffler 29. The left and right junction pipes 28a and 28b are connected with a first communicating pipe 52 which extends from the front wall 29g of the first muffler 29 through the second expansion chamber a, penetrates through the partition wall 35, and opens within the first expansion chamber b. The rear end of the first communicating pipe 52 is air-tightly connected with the partition wall 35.

An exhaust outlet 50b is formed on a right wall 29h of the second expansion chamber a in the first muffler 29. An upstream port 30a of the connecting pipe 30 is connected to the exhaust outlet 50b to communicate therewith. A downstream port 30b of the connecting pipe 30 is connected to a front wall 31g of the second muffler 31 to communicate therewith.

An exhaust valve 37 is disposed within the connection pipe 30. The exhaust pipe 37 is constituted by a valve stem 37b which penetrates through the connecting pipe 30 in the radial direction and a valve plate 37a which is fixed to the valve stem 37b to vary the passage area in the connecting pipe 30. The valve stem 37b is disposed with inclination such that the valve stem 37b passes the center of the left and right inclined sides 31 a, 31 a and that the upper end of the valve stem 37b is positioned outside.

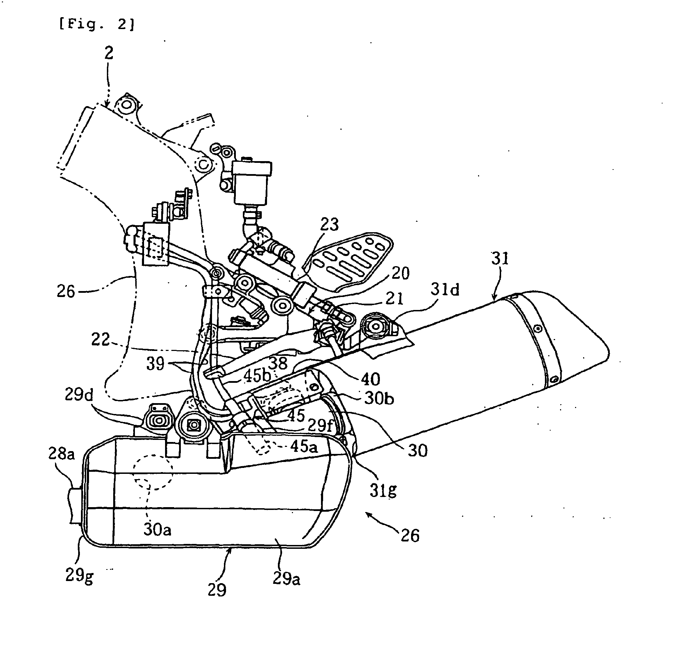

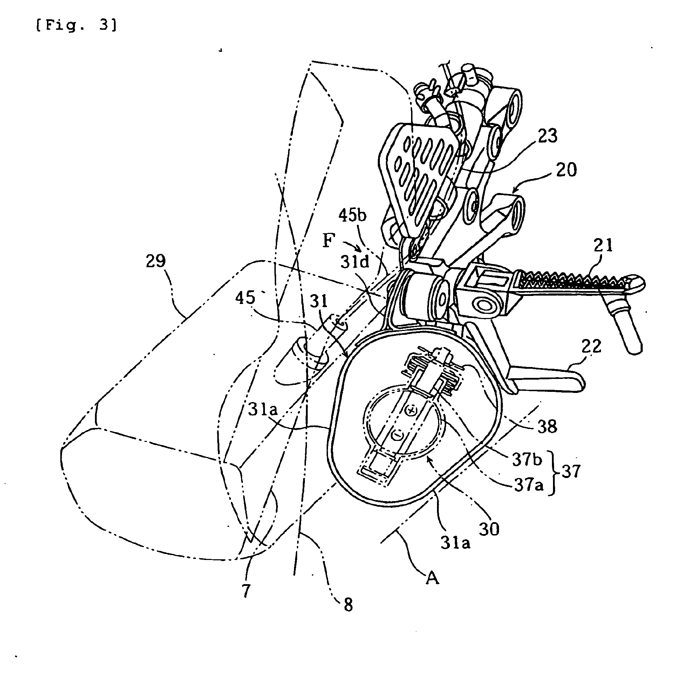

A driving cable 39 is connected with the valve stem 37b via a pulley 38. The driving cable 39 extends upward along the inner surface of the rear arm bracket 2b to be connected with a not-shown driving motor (see Figs. 2 and 3). The exhaust valve 37 closes the passage at the time of the low-speed revolution including the time of engine start-up, and opens the passage at the time of high-speed revolution.

The exhaust valve 37 is covered by a cover 40 which is provided to be continued to the second muffler 31. The cover 40 therefore provides an external appearance of the first and second mufflers 29 and 31 which looks as if they were formed integrally with each other.

Large-diameter portions 28a' and 28b' expanding downward are formed on the left and right junction pipes 28a and 28b at positions upstream of the connecting positions between the junction pipes 28a and 28b and the first muffler 29. More specifically, the large-diameter portions 28a' and 28b' are disposed such that their edges do not project outside the inclined portions 29a of the first muffler 29, preferably lie inside the inclined portions 29a. Thus, the sufficient angle of bank can be secured even in the structure where the large-diameter portions 28a' and 28b' are formed. A first catalyst 43 is provided within the large-diameter portions 28a' and 28b'. The main function of the first catalyst 43 is purification of hydrocarbon generated at the time of engine start-up.

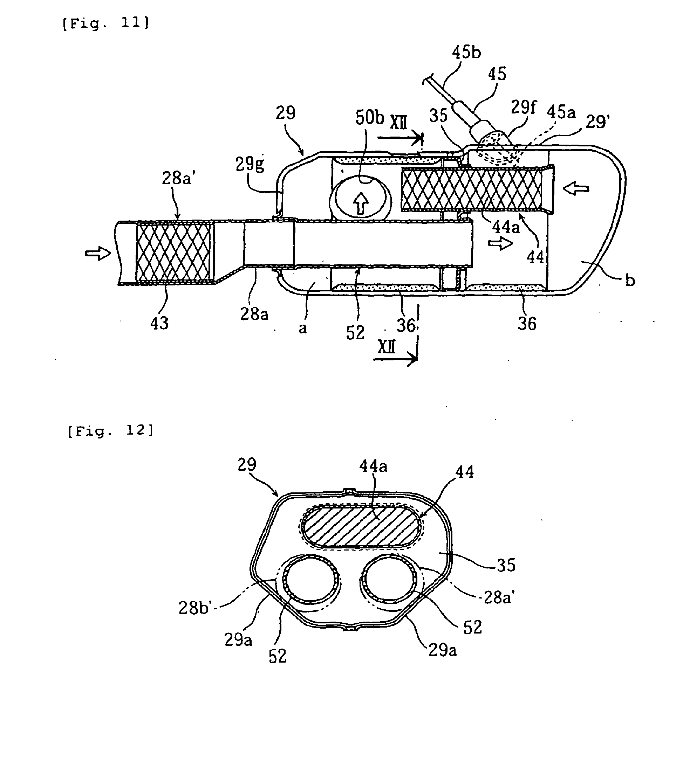

A second catalyst 44a is provided within the second communicating pipe 44 disposed at the boundary between the first expansion chamber b and the second expansion chamber a in the first muffler 29. The second catalyst 44a has a wide oblong shape which has a major axis extending in the vehicle width direction as viewed in the transverse cross-sectional view (see Fig. 12). The second communicating pipe 44 is air-tightly fixed to the partition wall 35, and penetrates through the partition wall 35 to connect the first expansion chamber b and the second expansion chamber a such that these chambers can communicate with each other.

A detection section 45a of an oxygen sensor 45 is inserted into the first expansion chamber b of the first muffler 29 and attached to the chamber b. The oxygen sensor 45 is fitted to a boss 29f formed on the right edge of the upper wall of the first muffler 29, and is disposed in such a position as to be directed toward the inside front F of the right foot rest 21. Leads 45b connected with the oxygen sensor 45 pass through the inside of the brake pedal 22, and extend along the driving cable 39. Then, the leads 45b are tied up with the driving cable 39 and clamped to the foot rest bracket 20.

Exhaust gas passes through the respective exhaust pipes 27a through 27d and reaches the left and right junction pipes 28a and 28b, where the gas is purified by the first catalyst 43 and flows into the first expansion chamber b. Then, the exhaust gas coming from the first expansion chamber b is purified by the second catalyst 44a while passing therethrough, and flows into the second expansion chamber a. Thereafter, the exhaust gas coming from the second expansion chamber a flows through the connecting pipe 30 into the second muffler 31. Finally, the exhaust gas is discharged through the discharge port 31 b of the second muffler 31.

According to the exhaust system 25 in this embodiment, the following arrangement is employed. The first muffler 29 connected with the left and right junction pipes 28a and 28b is interposed between the oil pan 15b of the engine 15 and the rear wheel 8. The second muffler 31 connected with the first muffler 29 is disposed on the right side of the rear wheel 8. The inclined portions 29a, 29a for increasing the angle of bank are formed on the left and right lower edges of the first muffler 29. The inclined portions 31 a having substantially the same angle as that of the inclined portions 29a of the first muffler 29 are formed on the second muffler 31. In this structure, a sufficient angle of bank is secured with the center of gravity of the vehicle located at a low position. Thus, both running stability and maneuverability can be enhanced.

Additionally, since the respective exhaust pipes 27a through 27d and the left and right junction pipes 28a and 28b pass through the lower part of the oil pan 15b of the engine 15, a sufficient length of the exhaust pipe unit can be secured.

In this embodiment, the first muffler 29 is disposed between the oil pan 15b and the rear wheel 8 and below the foot rest 21. Thus, the first muffler 29 can be disposed while effectively utilizing the vacant space with a sufficient angle of bank secured, which increases capacities of the second and first expansion chambers a and b. Also, since the bottom surface of the first muffler 29 is located substantially at the same level as that of the minimum road clearance, the position of the center of gravity of the vehicle can be further lowered.

Moreover, since a partial proportion of the necessary muffler capacity is constituted by the first muffler 29, the size of the second muffler 31 can be decreased. Thus, the major part of the second muffler 31 including the discharge port 31 b can be disposed within the projection plane of the rear wheel 8. Therefore, the area around the rear region of the vehicle can be tightly arranged compared with the structure where the muffler projects from the rear wheel 8, which provides design variations. In addition, the second muffler 31 is located at a low position in this arrangement, which also contributes to the lowering of the center of gravity.

Since the upper end planes of the discharge port 31 b of the second muffler 31 and the rear arm 7 are substantially at the same level as viewed in the vehicle width direction, design with uniformity can be offered.

In this embodiment, the inside of the first muffler 29 is divided by the partition wall 35 into the second expansion chamber a and the first expansion chamber b, and the left and right junction pipes 28a and 28b penetrate through the second expansion chamber a via the first communicating pipe 52 and open within the first expansion chamber b. Since the length of the exhaust pipe unit is extended substantially by the portions passing through the second expansion chamber a, a sufficient length of the expansion pipe unit 25a can be secured. Accordingly, the torque in the medium speed range can be enhanced.

In this embodiment, the left and right junction pipes 28a and 28b are connected with the front wall 29g of the first muffler 29, and the upstream port 30a and the downstream port 30b of the connecting pipe 30 are connected with the right wall 29h of the first muffler 29 and the front wall 31 g of the second muffler 31, respectively. Thus, the first and second mufflers 29 and 31 and the exhaust pipe unit 25a can be arranged in a balanced manner.

In this embodiment, the first catalyst 43 is disposed in the left and right junction pipe 28a and 28b in the vicinity of the upstream portion of the first muffler 29, and the second catalyst 44a is disposed at the boundary between the first expansion chamber b and the second expansion chamber a of the first muffler 29. Thus, purification of exhaust gas immediately after engine start-up can be securely executed. Moreover, since an appropriate clearance is provided between the first and second catalysts 43 and 44a, the exhaust gas purification can be performed in a broad operational range.

Since the first catalyst 43 is disposed within the large-diameter portions 28a' and 28b' in the exhaust junction pipes 28a and 28b, increase in flow passage resistance can be prevented. Moreover, since the first catalyst 43 is located upstream of the first muffler 29, i.e., near the engine 15, activation speed of the catalyst 43 at the time of engine start-up can be increased. Furthermore, since the large-diameter portions 28a' and 28'b are provided within the oblique line A indicating the angle of bank, narrowing of the angle of bank is prevented.

In this embodiment, since the detection section 45a of the hydrogen sensor 45 is inserted into the first expansion chamber b of the first muffler 29, the detection section 45a detects the oxygen concentration of the exhaust gas having passed through the first catalyst 43. It is therefore possible to securely detect the air fuel ratio around the stoichiometry at which all NOX, CO, and HC included in the exhaust gas can be effectively purified.

Since the oxygen sensor 45 is disposed in such a position as to be directed to the inside front of the right foot rest 21, the leads 45b of the oxygen sensor 45 which extend through the inside of the foot rest 21 along the rear arm bracket 2b can be provided together with the driving cable 38 of the exhaust valve 37, leads of a brake lamp switch and the like. Thus, no dedicated bracket and clamp for the leads 45b of the oxygen sensor 45 are required.

In this embodiment, the exhaust valve 37 for varying the passage area is disposed within the connecting pipe 30. The exhaust valve 37 closes the passage at the time of the low-speed revolution including the time of engine start-up, and opens the passage at the time of high-speed revolution. Accordingly, the engine output is increased, while noise generated in the low-revolution operational range is reduced.

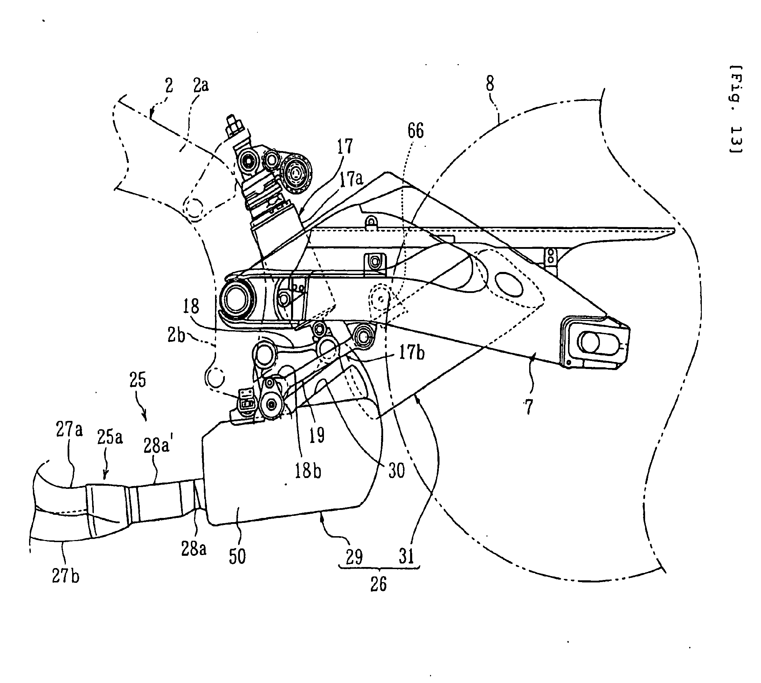

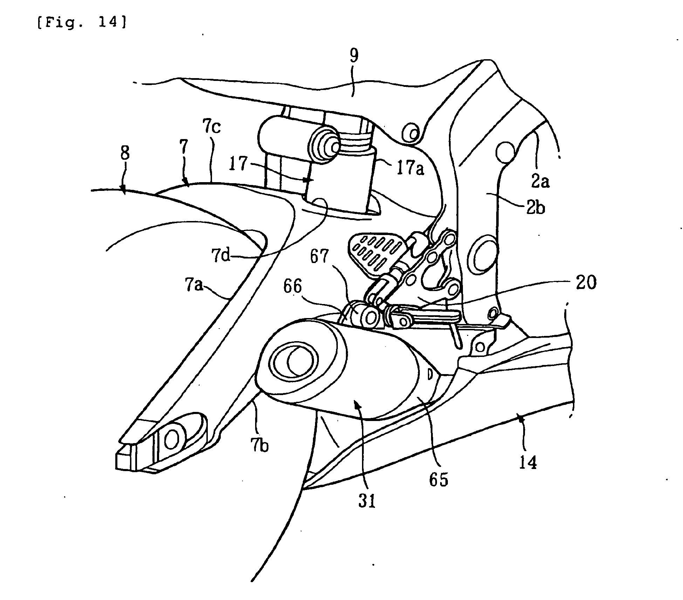

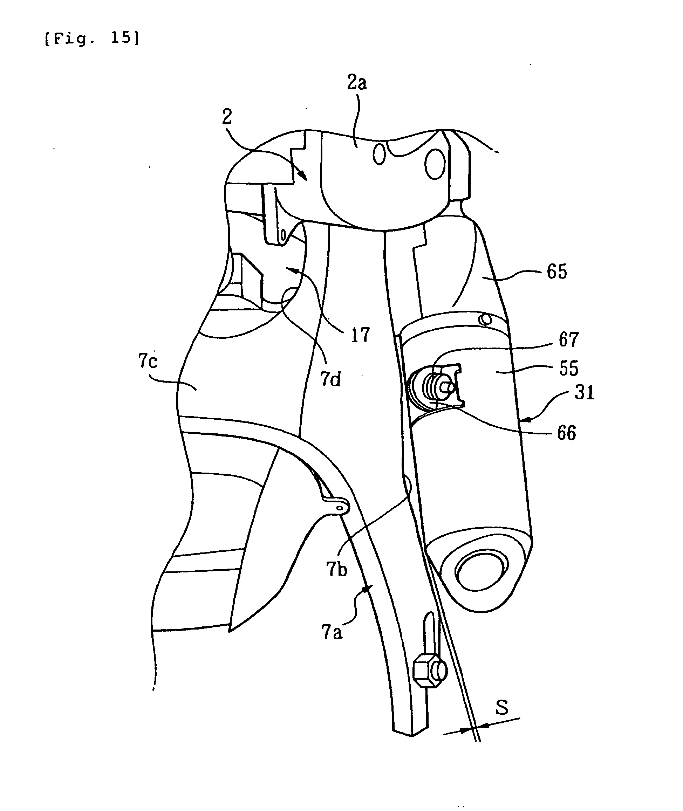

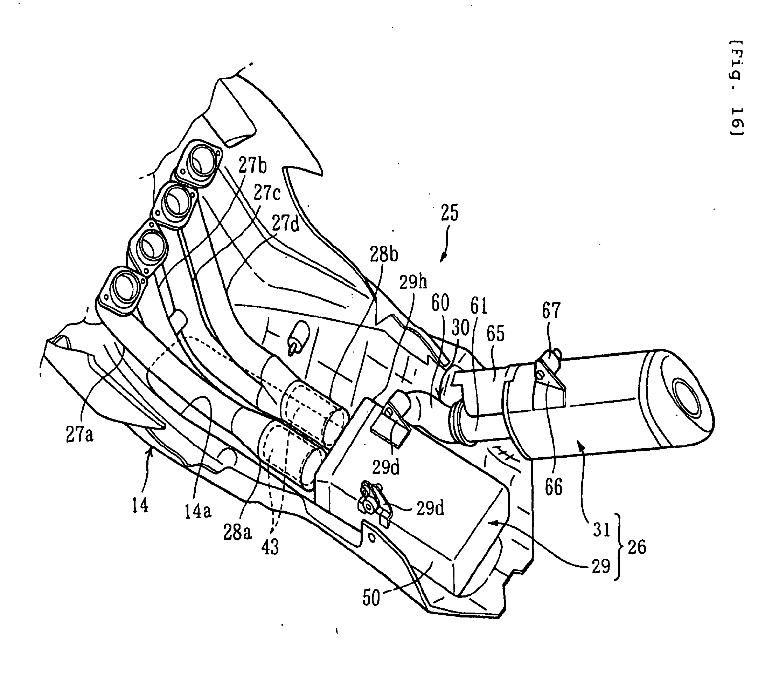

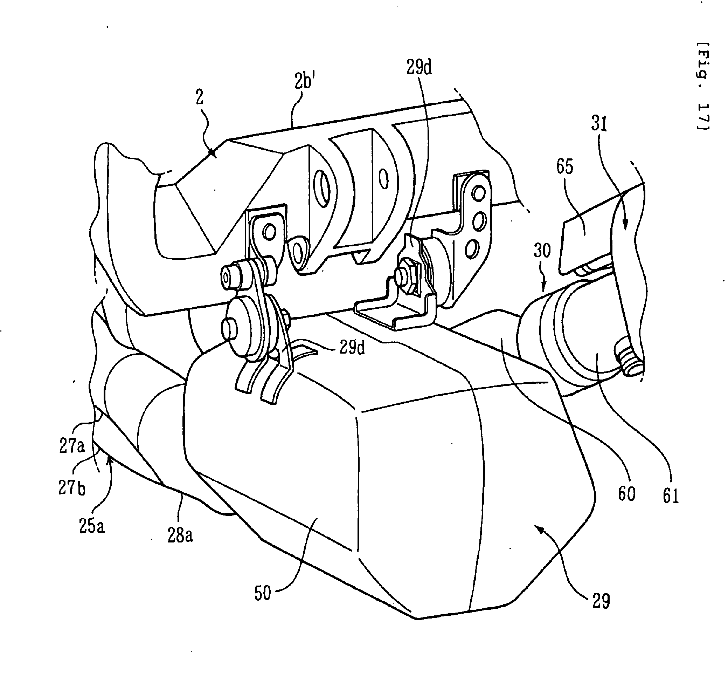

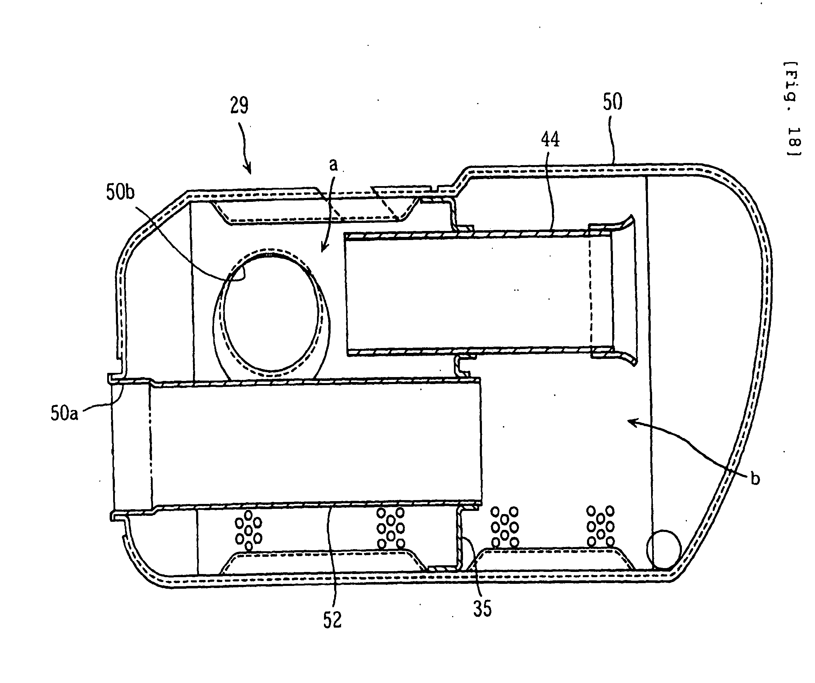

Figs. 13 through 19 are figures for explaining an exhaust system of a motorcycle in a second embodiment. In these figures, reference numerals similar to those in Figs. 1 through 12 refer to similar or corresponding components.

The exhaust system 25 in this embodiment includes: the exhaust pipe unit 25a connected with the engine 15; the first muffler 29 disposed below the engine and attached to the cross frame member 2b' of the rear arm bracket 2b as a part of the vehicle body frame; and the second muffler 31 connected with the first muffler 29 via connecting pipes 60 and 61 and disposed on the right side of the rear wheel 8. Thus, the basic structure of the exhaust system 25 in this embodiment is substantially the same as that in the first embodiment.

The first muffler 29 has: a substantially rectangular solid outside wall member 50 which is long in the front-to-rear direction; a pair of left and right exhaust inlets 50a formed on the front wall of the outside wall member 50; the partition wall 35 for dividing the inside of the outside wall member 50 into the second expansion chamber a formed at the front and the first expansion chamber b formed at the rear; and the exhaust outlet 50b as a single opening formed on the right surface of the outside wall member 50 near the front to communicate with the second expansion chamber a.

The second and first expansion chambers a and b of the first muffler 29 communicate with each other through a second communicating pipe 44 which penetrates through the partition plate 35. The left and right exhaust inlets 50a and the first expansion chamber b communicate with each other through a pair of the left and right first communicating pipes 52, 52. The left and right junction pipes 28a and 28b are connected with the left and right first communicating pipes 52.

The left and right first communicating pipes 52, 52 are arranged in parallel in the vehicle width direction and within the lower region of the first muffler 29. The second communicating pipe 44 is disposed above the first communicating pipes 52, and has a long-hole shape which is long in the vehicle width direction as viewed in the transverse cross-sectional view. The exhaust outlet 50b is formed so that it faces to the downstream end of the second communicating pipe 44 of the second expansion chamber a, and is located above the first communicating pipes 52.

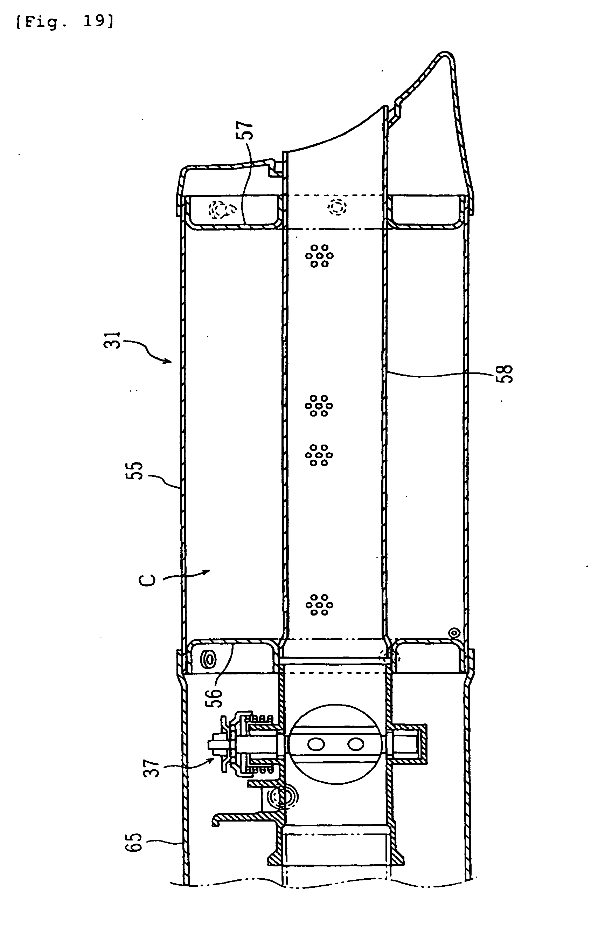

As illustrated in Fig. 19, the second muffler 31 includes: an outer cylindrical member 55 which is substantially cylindrical; front and rear lids 56 and 57 for closing both end openings of the outer cylindrical member 55; and an inner cylindrical member 58 which is made of punching metal and inserted into the outer cylindrical member 55 such that the inner cylindrical member 58 penetrates through the front and rear lids 56 and 57. A third expansion chamber c is formed by the outer cylindrical member 55 and the inner cylindrical member 58, and the inside of the third expansion chamber c is filled with not-shown sound absorbing material such as glass wool.

The first connecting pipe 60 is connected with the exhaust outlet 50b formed on the right wall 29h of the first muffler 29. The second connecting pipe 61 communicating with the inner cylindrical member 58 is connected with the front lid 56 of the second muffler 31. The first and second connecting pipes 60 and 61 are connected with each other, and constitute a connecting passage for connecting the side wall rear portion of the first muffler 29 and the front wall of the second muffler 31 such that they can communicate with each other. The exhaust valve 37 described above is disposed in the second connecting pipe 61.

A heat insulating cover 65 for covering the outside-vehicle portions of the second connecting pipe 61 and the exhaust valve 37 is attached to the second muffler 31. The heat insulating cover 65 protects an actuator of the exhaust valve 37 from the external force, and prevents transmission of heat generated in the second muffler 31 to the legs of the rider.

A bracket 66 is attached to the upper surface of the outer cylindrical member 55 of the second muffler 31. The bracket 66 is fixed to the foot rest bracket 20 describe above via a damper 67.

The second muffler 31 is disposed along a right arm member 7a of the rear arm 7 in the vicinity thereof. A clearance concave 7b is formed on the right arm member 7a to prevent interference with the second muffler 31. The clearance concave 7b provides a predetermined clearance S between the outer peripheral surface of the second muffler 31 and the right arm member 7a.

The rear suspension 17 described above is interposed between the rear arm 7 and the vehicle body frame 2. The damper 17a of the rear suspension 17 is positioned within an insertion hole 7d formed at the center of a pivot base 7c of the rear arm 7 in the vehicle width direction. The rear suspension 17 is disposed so as to be positioned above the fist muffler 29.

The lower portion and the left and right sides of the first muffler 29 are covered by the under cowl 14 described above. A front opening 14b for introducing flow of air generated during running of the vehicle is formed on the front surface of the under cowl 14. A discharge opening 14a for discharging the introduced air to the outside is formed on the bottom of the under cowl 14. The discharge opening 14a has a front-to-rear length extending from the front ends of the left and right junction pipes 28a and 28b to the rear end of the first muffler 29.

The air introduced through the front opening 14b into the under cowl 14 is supplied to the respective exhaust pipes 27a through 27d, the left and right junction pipes 28a and 28b, and the outer surface of the first muffler 29. The air having cooled these components is discharged through the discharge opening 14a to the outside.

In this embodiment, the first muffler 29 is disposed below the engine 15. Thus, the center of gravity of the vehicle body is located at a lower position. Accordingly, the rolling inertia can be reduced, and the weight of the vehicle body can be easily balanced in the front-to-rear direction.

Since the first and second mufflers 29 and 31 are separately disposed such that the first muffler 29 is below the engine 15 and that the second muffler 31 is in the vicinity of the right side of the rear wheel 8, the sufficient capacity of the first muffler 29 is secured without interference with the rear wheel 8. Moreover, as the distance from the front wheel 5 is increased, the exhaust pipe unit length is enlarged accordingly. Therefore, engine performance of a vehicle including a high-output engine can be enhanced.

Since the side wall of the first muffler 29 and the front wall of the second muffler 31 are connected with each other via the first and second connecting pipes 60 and 61, the first and second mufflers 29 and 31 can be separately disposed without increasing the distance therebetween. This structure provides compact arrangement of the first and second mufflers 29 and 31 while preventing interference with the engine 15, the rear wheel 8, the rear arm 7 and other components.

In this embodiment, the left and right first communicating pipes 52, 52 are positioned within the lower region of the first muffler 29, and the second communicating pipe 44 is located above the first communicating pipes 52. The transverse cross section of the second communicating pipe 44 has a long-hole shape which is long in the vehicle width direction. Accordingly, the length of the first muffler 29 in the vehicle width direction can be reduced, and enlargement in the size of the first muffler 29 can be prevented when the first muffler 29 is used as a common muffler for the respective cylinders.

In this embodiment, the rear suspension 17 is disposed above the first muffler 29. Thus, the rear suspension 17 can be provided while effectively utilizing the vacant space above the compact first muffler 29.

In this embodiment, the heat insulating cover 65 for covering the outside-vehicle portions of the connecting pipe 61 and the exhaust valve 37 is attached to the second muffler 31. It is therefore possible to prevent damage to the actuator of the exhaust valve 37 by the external force, and transmission of heat generated in the second muffler 31 to the legs of the rider.

In this embodiment, the clearance concave 7b for eliminating interference with the second muffler 31 is formed on the rear arm 7. Accordingly, the second muffler 31 can be disposed closer to the vehicle inside by the length of the clearance concave 7b, and thus the length of the vehicle body in the vehicle width direction can be further reduced.

In this embodiment, the discharge opening 14a through which flow of air generated during running of the vehicle is discharged to the outside is formed on the under cowl 14 which covers the lower region of the first muffler 29. Thus, the discharge efficiency of air introduced into the under cowl 14 can be increased, and also the cooling efficiency of the exhaust pipe unit 25a and the first muffler 29 can be enhanced.

The description above discloses (amongst others) an embodiment of an exhaust system of a motorcycle including: an exhaust pipe unit connected with an engine; and a muffler unit connected with the exhaust pipe unit. The exhaust pipe unit passes through the lower portion of the engine. The muffler unit includes a first muffler connected with the exhaust pipe unit and disposed between the lower portion of the engine and a rear wheel, and a second muffler connected with the first muffler and disposed near the side of the rear wheel. Inclined portions are formed on the left and right sides of the first muffler such that the inclination of the inclined portions rises toward the outside in the vehicle width direction as viewed from the front of the vehicle. The second muffler extends to the rear of the vehicle and is inclined at an angle approximately equal to that of the inclined portions of the first muffler.

In the exhaust system according to this embodiment the first muffler connected with the exhaust pipe unit is interposed between the lower portion of the engine and the rear wheel; the second muffler connected with the first muffler is disposed near the side of the rear wheel; inclined portions are formed on the left and right sides of the first muffler; and the second muffler is inclined at the angle approximately equal to that of the inclined portions of the first muffler. Accordingly, a sufficient angle of bank can be secured while lowering the position of the center of gravity of the vehicle body, and thus both running stability and maneuverability can be enhanced. Moreover, since the exhaust pipe unit passes through the lower portion of the engine, a sufficient length of the exhaust pipe unit can be obtained.

Preferably, in the exhaust system of a motorcycle, the first muffler is disposed between an oil pan of the engine and the rear wheel as viewed from the side of the vehicle.

Further, preferably in the exhaust system of a motorcycle, the bottom surface of the fist muffler is disposed approximately at the same level as that of the minimum road clearance as viewed from the side of the vehicle.

Still further, preferably in the exhaust system of a motorcycle, the second muffler extends diagonally upward to the rear with inclination which rises toward the rear, and at least a discharge port of the second muffler lies within the projection plane of the rear wheel in the vehicle width direction as viewed from the side of the vehicle.

Yet further, preferably in the exhaust system of a motorcycle, the upper end plane of the discharge port of the second muffler is disposed approximately at the same level as that of the upper end plane of a rear arm which supports the rear wheel as viewed from the side of the vehicle.

Beneficially, in the exhaust system of a motorcycle, the first muffler is divided into a first expansion chamber formed at the rear, a second expansion chamber formed at the front, and a rear expansion chamber, the exhaust pipe unit penetrates through the second expansion chamber and opens within the first expansion chamber, and the first and second expansion chambers communicated with each other through a communicating pipe.

Further beneficially, in the exhaust system of a motorcycle, an upstream port of a connecting passage which communicates with the second expansion chamber is connected with the side wall of the first muffler, and a downstream port of the connecting passage is connected with the front wall of the second muffler so as to communicate therewith.

Still further beneficially, in the exhaust system of a motorcycle, a first catalyst is provided within the exhaust pipe unit in the vicinity of the upstream portion of the first muffler, and a second catalyst is provided within the communicating pipe for connecting the first and second expansion chamber such that these chambers can communicate with each other.

Yet further beneficially, in the exhaust system of a motorcycle, the portion of the exhaust pipe unit in which the first catalyst is provided lies inside the angle of bank as viewed from the front of the vehicle.

According to a preferred embodiment of the exhaust system of a motorcycle, a detection section of an oxygen sensor is inserted into the first expansion chamber of the first muffler.

According to a further preferred embodiment of the exhaust system of a motorcycle, the oxygen sensor is so positioned as to be directed to the inside front of a foot rest.

According to a still further preferred embodiment of the exhaust system of a motorcycle, the first muffler is disposed below the engine and attached to a vehicle body frame, the second muffler is disposed near the side of the rear wheel, and a portion of the side wall of the first muffler near the second muffler and the front wall of the second muffler is connected through a connecting passage such that the first and second mufflers can communicate with each other.

According to yet another preferred embodiment of the exhaust system of a motorcycle, the first muffler includes a first expansion chamber formed at the rear, a second expansion chamber formed at the front and connected with the exhaust pipe unit, a first connecting pipe for connecting the exhaust pipe unit and the first expansion chamber within the second expansion chamber, and a second connecting pipe for connecting the first expansion chamber and the second expansion chamber, and the second muffler includes a third expansion chamber connected with the second expansion chamber.

In the exhaust system of a motorcycle, the first connecting pipe may be disposed in the lower region of the first muffler, and the second connecting pipe may be disposed in the upper region of the first muffler.

Therein, in the exhaust system of a motorcycle, the transverse cross section of the second connecting pipe may have a long-hole shape which is long in the vehicle width direction.

In the exhaust system of a motorcycle, the exhaust pipe unit may have a plurality of exhaust pipes, and at least two junction pipes for unifying the respective exhaust pipes, and the respective junction pipes may be connected with the first muffler and arranged in parallel in the vehicle width direction.

In the exhaust system of a motorcycle, a catalyst may be provided within the exhaust pipe unit at a portion upstream of a connecting portion between the exhaust pipe unit and the first muffler.

In the exhaust system of a motorcycle, a rear suspension for connecting a rear arm for supporting the rear wheel and the vehicle body frame may be disposed above the first muffler.

In the exhaust system of a motorcycle, the second muffler may be disposed along a rear arm for supporting the rear wheel and a clearance concave for providing a predetermined clearance between the rear arm and the outer periphery of the second muffler may be formed on the rear arm.

In the exhaust system of a motorcycle, the lower portion of the first muffler may be covered by an under cowling, and a front opening through which flow of air generated during running of the motorcycle is introduced and a discharge opening through which the air is discharged may be formed on the under cowling.

In the exhaust system of a motorcycle, a connecting passage for connecting the first muffler and second muffler may be equipped and an exhaust valve for varying the passage area may be disposed within the connecting passage.

In the exhaust system of a motorcycle, a connecting passage for connecting the first muffler and second muffler may be equipped and a heat insulating cover for covering at least the outside-vehicle portion of the connecting passage may be provided on the second muffler.

In the exhaust system of a motorcycle, an exhaust valve for varying the passage area may be disposed within the connecting passage and the heat insulating cover may cover the exhaust valve as well as the connecting passage.

Within the description above, a particularly preferred embodiment in order to provide an exhaust system of a motorcycle having a sufficient length of an exhaust pipe unit and a sufficient angle of bank with the center of gravity of the vehicle body located at a lower position is provided, wherein in an exhaust system of a motorcycle, an exhaust pipe unit 25a is disposed so as to pass through the lower portion of an engine 15. A muffler unit 26 includes a first muffler 29 connected with the exhaust pipe unit 25a and disposed between the engine 15 and a rear wheel 8, and a second muffler 31 connected with the first muffler 29 and disposed near the side of the rear wheel 8. Inclined portions 29a, 29a for increasing an angle of bank are formed on the left and right sides of the first muffler 29 as viewed from the front of the vehicle. The second muffler 31 has inclined portions 31 a having an angle approximately equal to that of the inclined portions 29a of the first muffler 29.

## Claims

1. Motorcycle (1), comprising an engine (15), an exhaust pipe unit (25a) connected with the engine (15), and a muffler unit (26) connected with the exhaust pipe unit (25a), wherein the muffler unit (26) includes first and second separately disposed mufflers (29,31), wherein the first muffler is connected with the exhaust pipe unit (25a) and is disposed between a lower portion of the engine (15) and a rear wheel (8), and wherein the second muffler (31) is connected with the first muffler (29) and is disposed near a side of the rear wheel (8), **characterized In that** inclined portions (29a,29a) are formed on left and right sides of the first muffler (29) such that an inclination of the inclined portions (29a,29a) rises toward an outside in a vehicle width direction as viewed from a front of the motorcycle.

2. Motorcycle according to claim 1, **characterized In that** the exhaust pipe unit (25a) is disposed so as to pass through the lower portion of the engine (15).

3. Motorcycle according to claim 1 or 2, **characterized In that** the second muffler (31) extends to a rear of the vehicle and is inclined at an angle approximately equal to that of the inclined portions (29a,29a) of the first muffler (29).

4. Motorcycle according to one of the claims 1 to 3, **characterized In that** the first muffler (29) is disposed between an oil pan (15b) of the engine (15) and the rear wheel (8) as viewed from the side of the motorcycle.

5. Motorcycle according to one of the claims 1 to 4, **characterized in that** a bottom surface of the first muffler (29) is disposed approximately at the same level as that of the minimum road clearance (HL) as viewed from the side of the motorcycle.

6. Motorcycle according to one of the claims 1 to 5, **characterized In that** the second muffler (31) extends diagonally upward to the rear with inclination, which rises toward the rear, and wherein at least a discharge port (31 b) of the second muffler (31) lies within a projection plane of the rear wheel (8) in the vehicle width direction as viewed from the side of the motorcycle.

7. Motorcycle according to claim 6, **characterized In that** an upper end plane of the discharge port (31 b) of the second muffler (31) is disposed approximately at the same level as that of the upper end plane of a rear arm (7) which supports the rear wheel (8) as viewed from the side of the motorcycle.

8. Motorcycle according to one of the claims 1 to 7, **characterized in that** the first muffler (29) is divided into a first expansion chamber (b) formed at the rear, a second expansion chamber (a) formed at the front, and wherein the exhaust pipe unit (25a) penetrates through the second expansion chamber (a) and opens within the first expansion chamber (b), and the first and second expansion chambers (a,b) are communicated with each other through a communicating pipe (44).

9. Motorcycle according to claim 8, **characterized in that** an upstream port of a connecting passage (30) which communicates with the second expansion chamber (a) is connected with the side wall of the first muffler (29), and a downstream port of the connecting passage (30) is connected with the front wall of the second muffler (31) so as to communicate therewith.

10. Motorcycle according to claim 8 or 9, **characterized in that** a first catalyst (43) is provided within the exhaust pipe unit (25a) in the vicinity of an upstream portion of the first muffler (29), and a second catalyst (44a) is provided within the communicating pipe (44) for connecting the first and second expansion chamber (a,b) such that these chambers (a,b) can communicate with each other.

11. Motorcycle according to claim 10, **characterized in that** the portion of the exhaust pipe unit (25a) in which the first catalyst (43) is provided lies inside the angle of bank as viewed from the front of the motorcycle.

12. Motorcycle according to one of the claims 6 to 11, **characterized in that** a detection section of an oxygen sensor (45) is inserted into the first expansion chamber (b) of the first muffler (29).

13. Motorcycle according to claim 12, **characterized in that** the oxygen sensor (45) is so positioned as to be directed to the inside front of a foot rest (21).

14. Motorcycle according to one of the claims 1 to 7, **characterized in that** the first muffler (29) is disposed below the engine (15) and attached to a vehicle body frame, the second muffler (31) is disposed near the side of the rear wheel (8), and a portion of the side wall of the first muffler (29) near the second muffler (31) and the front wall of the second muffler (31) is connected through a connecting passage (30) such that the first and second mufflers (29,31) can communicate with each other.

15. Motorcycle according to one of the claims 1 to 7, **characterized in that** the first muffler (29) includes a first expansion chamber (b) formed at the rear, a second expansion chamber (a) formed at the front and connected with the exhaust pipe unit (25a), a first connecting pipe (52) for connecting the exhaust pipe unit (25a) and the first expansion chamber (b) passing through the second expansion chamber (a), and a second connecting pipe (44) for connecting the first expansion chamber (b) and the second expansion chamber (a), and the second muffler (31) includes a third expansion chamber (c) connected with the second expansion chamber (b).

16. Motorcycle according to claim 15, **characterized in that** the first connecting pipe (52) is disposed in a lower region of the first muffler (29), and the second connecting pipe (44) is disposed in an upper region of the first muffler (29).

17. Motorcycle according to claim 16, **characterized in that** a transverse cross section of the second connecting pipe (44) has a long-hole shape which is long in the vehicle width direction.

18. Motorcycle according to one of the claims 1 to 17, **characterized in that** the exhaust pipe unit (25a) has a plurality of exhaust pipes (27a-27d), and at least two junction pipes (28a,28b) for unifying the respective exhaust pipes (27a-27d), and the respective junction pipes (28a,28b) are connected with the first muffler (29) and arranged in parallel in the vehicle width direction.

19. Motorcycle according to one of the claims 1 to 18, **characterized in that** a catalyst (43) is provided within the exhaust pipe unit (25a) at a portion upstream of a connecting portion between the exhaust pipe unit (25a) and the first muffler (29).

20. Motorcycle according to one of the claims 1 to 19, **characterized in that** a rear suspension (17) for connecting a rear arm (7) for supporting the rear wheel (8) and the vehicle body frame is disposed above the first muffler (29).

21. Motorcycle according claim 20, **characterized in that** the second muffler (31) is disposed along the rear arm (7) for supporting the rear wheel (8), and a clearance concave (7b) for providing a predetermined clearance between the rear arm (7) and the outer periphery of the second muffler (31) is formed on the rear arm (7).

22. Motorcycle according to one of the claims 1 to 21, **characterized in that** the lower portion of the first muffler (29) is covered by an under cowling (14), and a front opening (14b) through which flow of air generated during running of the motorcycle is introduced and a discharge opening (14a) through which the air is discharged are formed on the under cowling (14).

23. Motorcycle according to one of the claims 9 to 22, **characterized in that** the connecting passage (30) for connecting the first muffler (29) and second muffler (31) is equipped with an exhaust valve (37) for varying the passage area is disposed within the connecting passage (30).

24. Motorcycle according to one of the claims 9 to 23, **characterized in that** the connecting passage (30) for connecting the first muffler (29) and second muffler (31) is equipped with a heat insulating cover (65) for covering at least the outside-vehicle portion of the connecting passage (30) which is provided on the second muffler (31).

25. Motorcycle according to claim 24, **characterized in that** the exhaust valve (37) for varying the passage area is disposed within the connecting passage (30), and the heat insulating cover (65) covers the exhaust valve (37) as well as the connecting passage (30).

## Patentansprüche

1. Motorrad (1), aufweisend einen Motor (15), eine Abgasrohreinheit (25a), verbunden mit dem Motor (15), und eine Schalldämpfereinheit (26), verbunden mit der Abgasrohreinheit (25a), wobei die Schalldämpfereinheit (26) erste und zweite separat angeordnete Schalldämpfer (29, 31) enthält, wobei der erste Schalldämpfer mit der Abgasrohreinheit (25a) verbunden ist und zwischen einem unteren Abschnitt des Motors (15) und einem Hinterrad (8) angeordnet ist, und wobei der zweite Schalldämpfer (31) mit dem ersten Schalldämpfer (29) verbunden ist und in der Nähe einer Seite des Hinterrades (8) angeordnet ist, **dadurch gekennzeichnet, dass** geneigte Abschnitte (29a, 29a) auf der linken und rechten Seite des ersten Schalldämpfers (29) derart gebildet sind, dass eine Neigung der geneigten Abschnitt (29a, 29a) nach außen, in die Richtung einer Breite des Motorrades ansteigt, wenn von vorn des Motorrades gesehen.

2. Motorrad nach Anspruch 1, **dadurch gekennzeichnet, dass** die Abgasrohreinheit (25a) angeordnet ist, um durch den unteren Abschnitt des Motors (15) hindurchzugehen.

3. Motorrad nach Anspruch 1 oder 2, **dadurch gekennzeichnet, dass** sich der zweite Schalldämpfer (31) sich nach hinten des Fahrzeuges erstreckt und unter einem Winkel, ungefähr gleich zu demjenigen der geneigten Abschnitte (29a, 29a) des ersten Schalldämpfers (29), geneigt ist.

4. Motorrad nach einem der Ansprüche 1 bis 3, **dadurch gekennzeichnet, dass** der erste Schalldämpfer zwischen einer Ölwanne (15b) des Motors (15) und dem Hinterrad (8), wenn von der Seite des Motorrades gesehen, angeordnet ist.

5. Motorrad nach einem der Ansprüche 1 bis 4, **dadurch gekennzeichnet, dass** eine Bodenoberfläche des ersten Schalldämpfers (29) ungefähr auf demselben Niveau wie das des minimalen Straßenabstandes (HL) angeordnet ist, wenn von der Seite des Motorrades gesehen.

6. Motorrad nach einem der Ansprüche 1 bis 5, **dadurch gekennzeichnet, dass** sich der zweite Schalldämpfer (31) diagonal aufwärts nach hinten mit einer Neigung erstreckt, die nach hinten ansteigt, und wobei zumindest eine Auslassöffnung (31 b) des zweiten Schalldämpfers (31) innerhalb einer Vorsprungsebene des Hinterrades (8) in Richtung der Breite des Fahrzeuges liegt, wenn von der Seite des Motorrades gesehen,

7. Motorrad nach Anspruch 6, **dadurch gekennzeichnet, dass** eine obere Endebene der Auslassöffnung (31 b) des zweiten Schalldämpfers ungefähr auf demselben Niveau angeordnet ist, wie das die obere Endebene eines hinteren Armes (7), der das Hinterrad (8) lagert, wenn von der Seite des Motorrades gesehen.

8. Motorrad nach einem der Ansprüche 1 bis 7, **dadurch gekennzeichnet, dass** der erste Schalldämpfer (29) in eine erste Expansionskammer (b), hinten gebildet, eine zweite Expansionskammer (a), vorn gebildet, geteilt ist und wobei die Abgasrohreinheit (25a) durch die zweite Expansionskammer (a) durchdringt und sich innerhalb der ersten Expansionskammer (b) öffnet, und die ersten und zweiten Expansionskammern (a, b) miteinander durch ein Verbindungsrohr (44) verbunden sind.

9. Motorrad nach Anspruch 8, **dadurch gekennzeichnet, dass** eine stromaufwärtige Öffnung eines Verbindungskanals (30), der mit der zweiten Expansionskammer (a) verbunden ist, mit der Seitenwand des ersten Schalldämpfers (29) verbunden ist, und eine stromabwärtige Öffnung des Verbindungskanals (30) mit der vorderen Wand des zweiten Schalldämpfers (31) verbunden ist, um mit dieser in Verbindung zu sein.

10. Motorrad nach Anspruch 8 oder 9, **dadurch gekennzeichnet, dass** ein erster Katalysator (43) innerhalb der Abgasrohreinheit (25a) in der Nähe eines stromaufwärtigen Abschnittes des ersten Schalldämpfers (29) vorgesehen ist und ein zweiter Katalysator (44a) innerhalb des Verbindungsrohres (44) vorgesehen ist, zum Verbinden der ersten und zweiten Expansionskammer (a, b) derart, dass diese Kammern (a, b) miteinander kommunizieren können.

11. Motorrad nach Anspruch 10, **dadurch gekennzeichnet, dass** der Abschnitt der Abgasrohreinheit (25a), in der der erste Katalysator (43) vorgesehen ist, innerhalb des Bankwinkels liegt, wenn von vorn des Motorrades gesehen.

12. Motorrad nach einem der Ansprüche 6 bis 11, **dadurch gekennzeichnet, dass** ein Erfassungsabschnitt eines Sauerstoffsensors (45) in die erste Expansionskammer (b) des ersten Schalldämpfers (29) eingesetzt ist.

13. Motorrad nach Anspruch 12, **dadurch gekennzeichnet, dass** der Sauerstoffsensor (45) so positioniert ist, dass er nach innen vor einer Fußstütze (21) gerichtet ist.

14. Motorrad nach einem der Ansprüche 1 bis 7, **dadurch gekennzeichnet, dass** der erste Schalldämpfer (29) unter dem Motor (15) angeordnet und mit einem Fahrzeugkarosserierahmen verbunden ist, der zweite Schalldämpfer (31) nahe der Seite des Hinterrades (8) angeordnet ist und ein Abschnitt der Seitenwand des ersten Schalldämpfers (29) nahe des zweiten Schalldämpfers (31) angeordnet ist und die vordere Wand des zweiten Schalldämpfers (31) durch einen Verbindungskanal (30) derart verbunden ist, dass der erste und zweite Schalldämpfer (29, 31) miteinander kommunizieren können.

15. Motorrad nach einem der Ansprüche 1 bis 7, **dadurch gekennzeichnet, dass** der erste Schalldämpfer (29) eine erste, hinten gebildete Expansionskammer (b) enthält, eine zweite Expansionskammer (a), vorn gebildet, und mit der Abgasrohreinheit (25a) verbunden, ein erstes Verbindungsrohr (52) zum Verbinden der Abgasrohreinheit (25a) und der ersten Expansionskammer (b), das durch die zweite Expansionskammer (a) hindurchgeht, und ein zweites Verbindungsrohr (44) zum Verbinden der ersten Expansionskammer (b) und der zweiten Expansionskammer (a), und wobei der zweite Schalldämpfer (31) eine dritte Expansionskammer (c), verbunden mit der zweiten Expansionskammer (b), enthält.

16. Motorrad nach Anspruch 15, **dadurch gekennzeichnet, dass** das erste Verbindungsrohr (52) in einem unteren Bereich des ersten Schalldämpfers (29) angeordnet ist und das zweite Verbindungsrohr (44) in einem oberen Bereich des ersten Schalldämpfers (29) angeordnet ist.

17. Motorrad nach Anspruch 16, **dadurch gekennzeichnet, dass** ein Querschnitt des zweiten Verbindungsrohres (44) in Richtung der Breite eine Langlochform hat, die in der Richtung der Fahrzeugbreite lang ist.

18. Motorrad nach einem der Ansprüche 1 bis 17, **dadurch gekennzeichnet, dass** die Abgasrohreinheit (25a) eine Mehrzahl von Abgasrohren (27a - 27d) hat und zumindest zwei Zusammenführungsrohre (28a, 28b) zum Zusammenführen der jeweiligen Abgasrohre (27a - 27d), und die jeweiligen Zusammenführungsrohre (28a, 28b) mit dem ersten Schalldämpfer (29) verbunden und parallel in der Richtung der Fahrzeugbreite angeordnet sind.

19. Motorrad nach einem der Ansprüche 1 bis 18, **dadurch gekennzeichnet, dass** ein Katalysator (43) innerhalb der Abgasrohreinheit (25a) an einem Abschnitt stromauf eines Verbindungsabschnittes zwischen der Abgasrohreinheit (25a) und dem ersten Schalldämpfer (29) vorgesehen ist.

20. Motorrad nach einem der Ansprüche 1 bis 19, **dadurch gekennzeichnet, dass** eine hintere Aufhängung (17) zum Verbinden eines hinteren Arms (7) zum Lagern des Hinterrades (8) und des Fahrzeugkarosserierahmens oberhalb des ersten Schalldämpfers (29) angeordnet ist.

21. Motorrad nach Anspruch 20, **dadurch gekennzeichnet, dass** der zweite Schalldämpfer (31) entlang des hinteren Armes (7) zum Lagern des Hinterrades (8) angeordnet ist und ein konkaver Spalt (7b) zum Schaffen eines vorbestimmten Spaltes zwischen dem hinteren Arm (7) und dem Außenumfang des zweiten Schalldämpfers (31) an dem hinteren Arm (7) gebildet ist.

22. Motorrad nach einem der Ansprüche 1 bis 21, **dadurch gekennzeichnet, dass** der untere Abschnitt des ersten Schalldämpfers (29) durch eine untere Verkleidung (14) abgedeckt ist und eine vordere Öffnung (14b), durch die der Luftstrom, erzeugt während des Fahrens des Motorrades, strömt, eingeleitet wird, und eine Auslassöffnung (14a), durch die die Luft abgegeben wird, an der unteren Verkleidung (14) gebildet sind.

23. Motorrad nach einem der Ansprüche 9 bis 22, **dadurch gekennzeichnet, dass** der Verbindungskanal (30), um den ersten Schalldämpfer (29) und den zweiten Schalldämpfer (31) zu verbinden, mit einem Auslassventil (37), um die Kanalfläche zu variieren, ausgerüstet ist, das innerhalb des Verbindungskanals (30) angeordnet ist.

24. Motorrad nach einem der Ansprüche 9 bis 23, **dadurch gekennzeichnet, dass** der Verbindungskanal (30), um den ersten Schalldämpfer (29) und den zweiten Schalldämpfer (31) zu verbinden, ausgerüstet ist mit einer wärmeisolierenden Abdeckung (65) zum Abdecken von zumindest dem äußeren Fahrzeugabschnitt des Verbindungskanals (30), der an dem zweiten Schalldämpfer (31) vorgesehen ist.

25. Motorrad nach Anspruch 24, **dadurch gekennzeichnet, dass** das Auslassventil (37) zum Variieren der Kanalfläche innerhalb des Verbindungskanals (30) angeordnet ist und die wärmeisolierende Abdeckung (65) das Auslassventil (37) sowie den Verbindungskanal (30) abdeckt.

## Revendications

1. Motocycle (1), comprenant un moteur (15), une unité de tuyau d'échappement (25a) raccordée au moteur (15), une unité de pot d'échappement (26) raccordée à l'unité de tuyau d'échappement (25a), dans laquelle l'unité de pot d'échappement (26) comprend des premier et second pots d'échappement (29, 31) disposés séparément, dans lequel le premier pot d'échappement est raccordé à l'unité de tuyau d'échappement (25a) et est disposé entre une partie inférieure du moteur (15) et une roue arrière (8), et dans lequel le second pot d'échappement (31) est raccordé au premier pot d'échappement (29) et est disposé à proximité d'un côté de la roue arrière (8), **caractérisée en ce que** des parties inclinées (29a, 29a) sont formées à gauche et à droite du premier pot d'échappement (29) de sorte qu'une inclinaison des parties inclinées (29a, 29a) monte vers un extérieur dans le sens de la largeur du véhicule, tel qu'observé à partir de l'avant de la motocycle.

2. Motocycle selon la revendication 1, **caractérisée en ce que** l'unité de tuyau d'échappement (25a) est disposée afin de passer à travers la partie inférieure du moteur (15).

3. Motocycle selon la revendication 1 ou 2, **caractérisée en ce que** le second pot d'échappement (31) s'étend vers un arrière du véhicule et est incliné selon un axe approximativement égal à celui des parties inclinées (29a, 29a) du premier pot d'échappement (29).

4. Motocycle selon l'une quelconque des revendications 1 à 3, **caractérisée en ce que** le premier pot d'échappement (29) est disposé entre un carter d'huile (15b) du moteur (15) et la roue arrière (8), tel qu'observé depuis le côté de la motocycle.

5. Motocycle selon l'une quelconque des revendications 1 à 4, **caractérisée en ce qu'**une surface inférieure du premier pot d'échappement (29) est disposée approximativement au même niveau que celui du jeu de route minimum (HL), tel qu'observé depuis le côté de la motocycle.

6. Motocycle selon l'une quelconque des revendications 1 à 5, **caractérisée en ce que** le second pot d'échappement (31) s'étend en diagonale vers le haut vers l'arrière avec une inclinaison, qui monte vers l'arrière, et dans lequel au moins un orifice d'évacuation (31b) du second pot d'échappement (31) se trouve dans un plan en saillie de la roue arrière (8) dans le sens de la largeur du véhicule, tel qu'observé depuis le côté de la motocycle.

7. Motocycle selon la revendication 6, **caractérisée en ce qu'**un plan d'extrémité supérieur de l'orifice d'évacuation (31b) du second pot d'échappement (31) est disposé approximativement au même niveau que celui du plan d'extrémité supérieur d'un bras arrière (7) qui supporte la roue arrière (8), tel qu'observé depuis le côté de la motocycle.

8. Motocycle selon l'une quelconque des revendications 1 à 7, **caractérisée en ce que** le premier pot d'échappement (29) est divisé en une première chambre d'expansion (b) formée à l'arrière, une seconde chambre d'expansion (a) formée à l'avant, et dans laquelle l'unité de tuyau d'échappement (25a) pénètre à travers la seconde chambre d'expansion (a) et s'ouvre dans la première chambre d'expansion (b), et les première et seconde chambres d'expansion (a, b) communiquent entre elles par le biais d'un tuyau de communication (44).

9. Motocycle selon la revendication 8, **caractérisée en ce qu'**un orifice en amont d'un passage de raccordement (30) qui communique avec la seconde chambre d'expansion (a) est raccordé à la paroi latérale du premier pot d'échappement (29), et un orifice en aval du passage de raccordement (30) est raccordé à la paroi avant du second pot d'échappement (31) afin de communiquer avec celui-ci.

10. Motocycle selon la revendication 8 ou 9, **caractérisée en ce qu'**un premier catalyseur (43) est prévu dans l'unité de tuyau d'échappement (25a) à proximité d'une partie en amont du premier pot d'échappement (29), et un second catalyseur (44a) est prévu dans le tuyau de communication (44) pour raccorder les première et seconde chambres d'expansion (a, b) de sorte que ces chambres (a, b) peuvent communiquer entre elles.

11. Motocycle selon la revendication 10, **caractérisée en ce que** la partie de l'unité de tuyau d'échappement (25a) dans lequel le premier catalyseur (43) est prévu, se trouve dans l'angle de banc tel qu'observé depuis l'avant de la motocycle.

12. Motocycle selon l'une quelconque des revendications 6 à 11, **caractérisée en ce qu'**une section de détection d'un capteur d'oxygène (45) est insérée dans la première chambre d'expansion (b) du premier pot d'échappement (29).

13. Motocycle selon la revendication 12, **caractérisée en ce que** le capteur d'oxygène (45) est positionné afin d'être dirigé vers l'avant intérieur d'un repose-pied (21).

14. Motocycle selon l'une quelconque des revendications 1 à 7, **caractérisée en ce que** le premier pot d'échappement (29) est disposé au-dessous du moteur (15) et fixé à un châssis de véhicule, le second pot d'échappement (31) est disposé à proximité du côté de la roue arrière (8), et une partie de la paroi latérale du premier pot d'échappement (29) à proximité du second pot d'échappement (31) et la paroi avant du second pot d'échappement (31) est raccordée par l'intermédiaire d'un passage de raccordement (30) de sorte que les premier et second pots d'échappement (29, 31) peuvent communiquer entre eux.

15. Motocycle selon l'une quelconque des revendications 1 à 7, **caractérisée en ce que** le premier pot d'échappement (29) comprend une première chambre d'expansion (b) formée à l'arrière, une seconde chambre d'expansion (a) formée à l'avant et raccordée à l'unité de tuyau d'échappement (25a), un premier tuyau de raccordement (52) pour raccorder l'unité de tuyau d'échappement (25a) et la première chambre d'expansion (b) en passant par la seconde chambre d'expansion (a), et un second tuyau de raccordement (44) pour raccorder la première chambre d'expansion (b) et la seconde chambre d'expansion (a), et le second pot d'échappement (31) comprend une troisième chambre d'expansion (c) raccordée à la seconde chambre d'expansion (a).

16. Motocycle selon la revendication 15, **caractérisée en ce que** le premier tuyau de raccordement (52) est disposé dans une région inférieure du premier pot d'échappement (29), et le second tuyau de raccordement (44) est disposé dans une région supérieure du premier pot d'échappement (29).

17. Motocycle selon la revendication 16, **caractérisée en ce qu'**une section transversale du second tuyau de raccordement (44) a une forme de trou long qui est long dans le sens de la largeur du véhicule.

18. Motocycle selon l'une quelconque des revendications 1 à 17, **caractérisée en ce que** l'unité de tuyau d'échappement (25a) a une pluralité de tuyaux d'échappement (27a-27d), et au moins deux tuyaux de jonction (28a, 28b) pour réunir les tuyaux d'échappement (27a-27d) respectifs, et les tuyaux de jonction (28a, 28b) respectifs sont raccordés au premier pot d'échappement (29) et agencés en parallèle dans le sens de la largeur du véhicule.

19. Motocycle selon l'une des revendications 1 à 18, **caractérisée en ce qu'**un catalyseur (43) est prévu dans l'unité de tuyau d'échappement (25a) au niveau d'une partie en amont de la partie de raccordement entre l'unité de tuyau d'échappement (25a) et le premier pot d'échappement (29).

20. Motocycle selon l'une quelconque des revendications 1 à 19, **caractérisée en ce qu'**une suspension arrière (17) pour raccorder un bras arrière (7) pour supporter la roue arrière (8) et un châssis de véhicule, est disposée au-dessus du premier pot d'échappement (29).

21. Motocycle selon la revendication 20, **caractérisée en ce que** le second pot d'échappement (31) est disposé le long du bras arrière (7) pour supporter la roue arrière (8), et un jeu concave (7b) pour déterminer un jeu prédéterminé entre le bras arrière (7) et la périphérie externe du second pot d'échappement (31) est formé sur le bras arrière (7).

22. Motocycle selon l'une quelconque des revendications 1 à 21, **caractérisée en ce que** la partie inférieure du premier pot d'échappement (29) est recouverte par un sous-carénage (14), et une ouverture avant (14b) à travers laquelle l'écoulement d'air généré pendant que la motocycle circule, est introduit et une ouverture d'évacuation (14a) à travers laquelle l'air est évacué, sont formées sur le sous-carénage (14).

23. Motocycle selon l'une quelconque des revendications 9 à 22, **caractérisée en ce que** le passage de raccordement (30) pour raccorder le premier pot d'échappement (29) et le second pot d'échappement (31) est équipé avec une soupape d'échappement (37) pour modifier la zone de passage, est disposé dans le passage de raccordement (30).

24. Motocycle selon l'une quelconque des revendications 9 à 23, **caractérisée en ce que** le passage de raccordement (30) pour raccorder le premier pot d'échappement (29) et le second pot d'échappement (31), est équipé avec un couvercle calorifuge (65) pour recouvrir au moins la partie externe du véhicule du passage de raccordement (30) qui est prévu sur le second pot d'échappement (31).

25. Motocycle selon la revendication 24, **caractérisée en ce que** la soupape d'échappement (37) pour modifier la zone de passage est disposée dans le passage de raccordement (30) et le couvercle calorifuge (65) recouvre la soupape d'échappement (37) ainsi que le passage de raccordement (30).
